# EUROPEAN PATENT SPECIFICATION

(11) **EP 1 153 692 B1**
(45) Date of publication and mention of the grant of the patent: **29.11.2006**
(21) Application number: 01830298.4
(22) Date of filing: 09.05.2001
(51) Int. Cl.: B23K 9/32, B23K 37/00, A61F 9/06, B25H 3/02, B65D 43/02

(54) **Packing container particularly for welding machines**
Verpackungbehälter insbesondere einer Schweissmaschine
Récipient en particulier d'une machine de soudage

(30) Priority: 11.05.2000 IT MI001037
(43) Date of publication of application: 14.11.2001
(73) Proprietor: Ricerca & Distribuzione S.r.l, 21100 Varese (IT)
(72) Inventor: Ricerca & Distribuzione S.r.l, 21100 Varese (IT)
(74) Representative: Pellegri, Alberto

(56) References cited:
- WO-A-91/15328
- DE-C- 4 015 895
- DE-U- 29 807 230
- FR-A- 2 549 013
- FR-A- 2 686 824
- GB-A- 449 328
- US-A- 2 253 403
- US-A- 2 277 090
- US-A- 2 325 506
- US-A- 3 110 034

## Description

The present invention relates to a packing container, particularly for welding for electrical equipments and accessories according to the preamble of claim 1 (see, for example, WO-A-91/15328).

### BACKGROUND OF THE INVENTION

Electric and electronic devices must be accurately packed by manufacturers, for safe and functional transportation. Moreover, the package is often exploited for attracting attention on the trademark of the manufacturer or on particular features of the product.

Nevertheless, after that the product has been sold, the package is not generally reused for normally carrying around the tools and machines. Consequently, the costs for packing a device and that significantly burden the price of the product are practically wasted. Moreover, it may be necessary to dispose of the materials used for the package, according to rules, thus there may be further costs for the user.

In case of welding machines, several accessories, such as a grounding cable, a torch cable, a welding mask, electrodes, safety clothes, such as gloves and/or an apron are needed. Obviously, the tradesman must carry along with him all these accessories, which implies making inventories all the times and organizing transportation of all these relatively heavy and encumbering objects.

The patent DE 40 15 895 C1 discloses an enclosure, at least a wall of which is partially transparent, that may be gas-tight sealed for welding small parts of titanium or a titanium alloy under controlled atmosphere.

The patent US 2,325,506 discloses a readily portable and compactly arranged container of the necessary supplies and accessories used by a welder, particularly a welder's shield.

The published patent application FR 2 686 824 discloses a toolbox, the cover of which is fastened with at least a toggle joint.

The patent application GB 449,328 discloses a welding screen the density of which is due essentially to a layer of material used in making safety glasses, faced with glass sheets preferably stuck or cemented to the layer after the manner of safety glass.

The document WO-A-91/15328 discloses a packing container substantially composed of two rigid bodies releasably hinged together, wherein one of them is used as a welding mask.

The US patent application No. 2,277,090 discloses a lightweight mask spaced from the face so that ventilation can take place between the face and the mask.

### OBJECT AND SUMMARY OF THE INVENTION

An object of the present invention is to provide a packing container, particularly for welding machines, for facilitating safe transportation of a welding machine and all the accessories.

Another object of the present invention is to provide a packing container, particularly for welding machines, that is easy to fabricate, economical and ecological because it is reusable and need not be disposed of.

A further object of the present invention is to realize a packing container, particularly for portable welding machines with a low cost/benefit ratio.

These objectives are reached by the packing container as defined in claim 1.

Other important technical features are recited in the other claims.

The packing container of the invention is primarily aimed at rendering the transport of a welding machines safer and more convenient than according to the prior art.

Advantageously, the packing container of this invention has a plurality of internal stiffening ribs or beads that, coupled with the mechanical strength of the material used for fabricating the container, provide for a good resistance to impacts and atmospheric agents.

Inside the packing container there are retainer particular holding means that, besides blocking the device in place within the container, isolate it from dangerous impacts and vibrations that are often cause of malfunctioning of electronic circuitry.

A portion of the packing container is usable as an accessory when using the contained device, so ensuring a particular functionality of the transportation.

### BRIEF DESCRIPTION OF THE DRAWINGS

Further characteristics and advantages will appear even more evident through the following description of a preferred but not limiting embodiment of the invention, and through the attached drawings wherein:

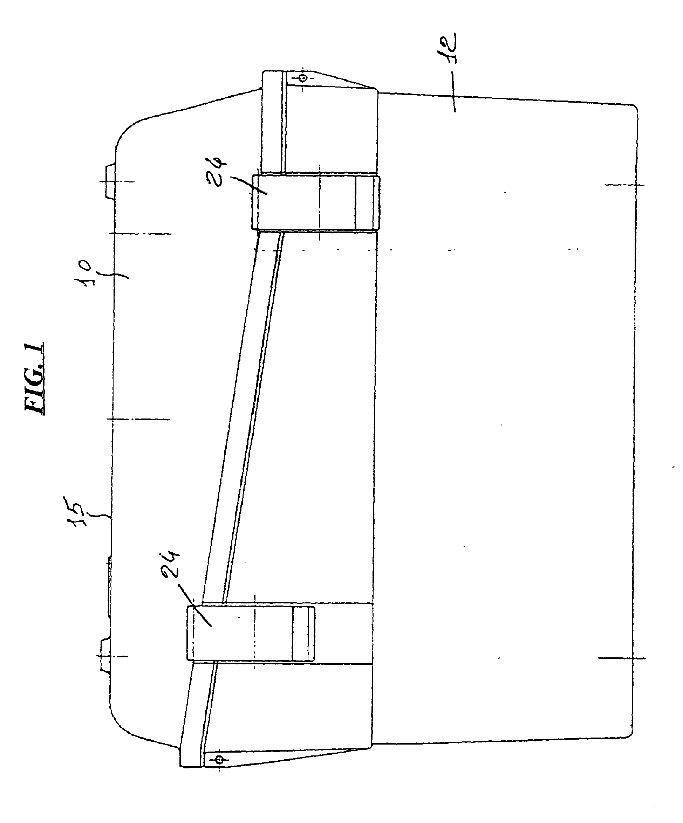

**Figure 1** is a lateral view of a packing container, particularly for welding machines, according to the present invention;

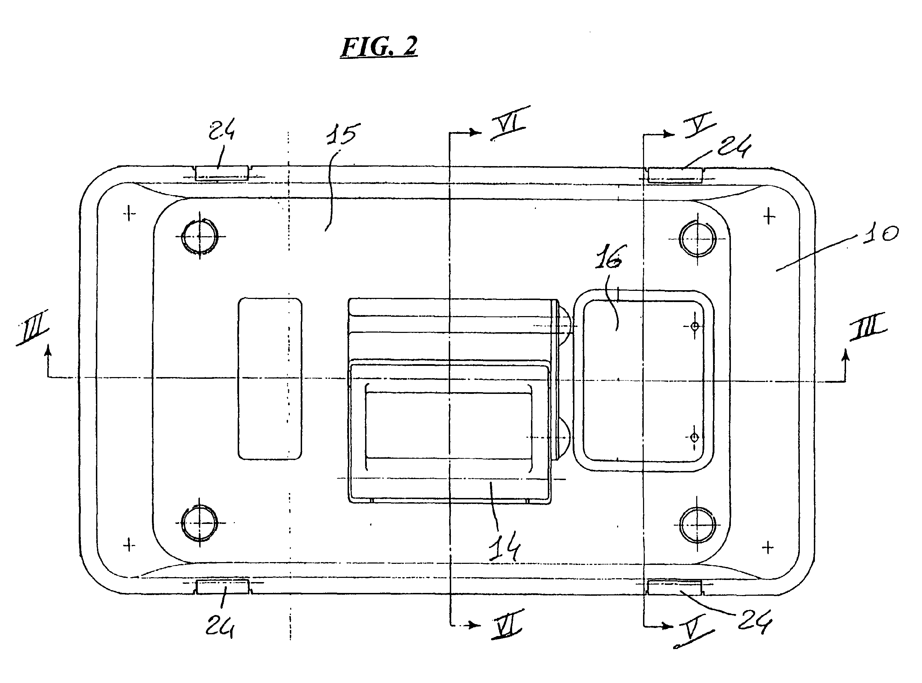

**Figure 2** is a plant view of the packing container of figure 1, according to the present invention;
**Figure 3** is a sectional view along the line III-III of figure 2 of a packing container according to the present invention with the handle in upright position;
**Figure 4** is a lateral and partially sectional view of the packing container of figure 1, according to the present invention, in a rest position with the transportation handle folded down;
**Figure 5** is a sectional view of the packing container of the invention along the line V-V of figure 2;
**Figure 6** is a sectional view of the packing container according to the present invention along the line VI-VI of figure 2;
**Figure 7** is a plan view of the inner bottom of packing container of figure 1.

### DESCRIPTION OF AN EMBODIMENT OF THE INVENTION

Referring to the figures, 10 is a top cover portion or cap of the packing container, particularly for welding machines, according to the present invention, 12 is the body of the packing container, and 24 is a clasp for securing the cap 10 to the body 12.

The cap 10 may be completely separated from the body 12, after having folded down the transportation handle 14 and after having shifted a slidable panel 16, that covers a special glass 19 for welding masks and a protective glass 18.

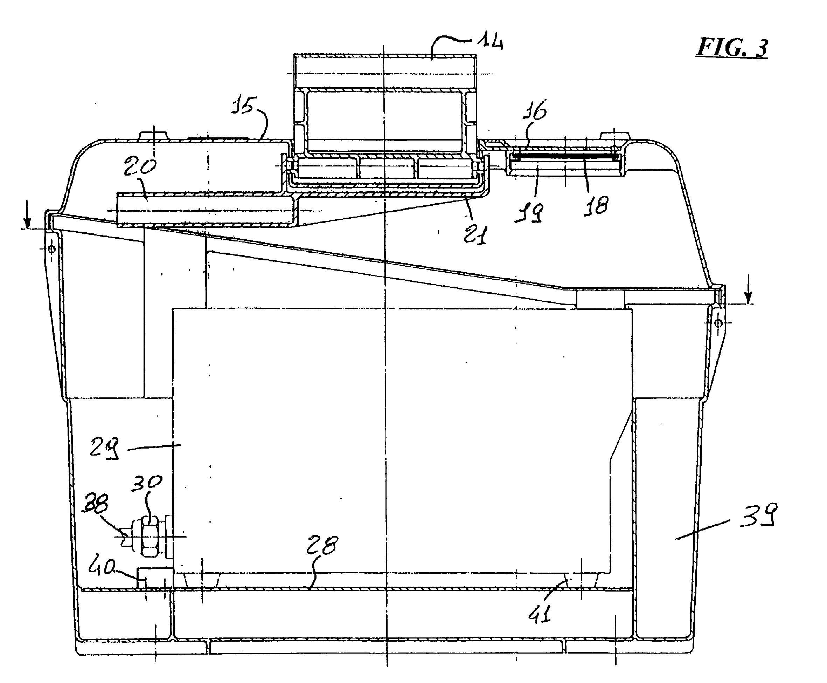

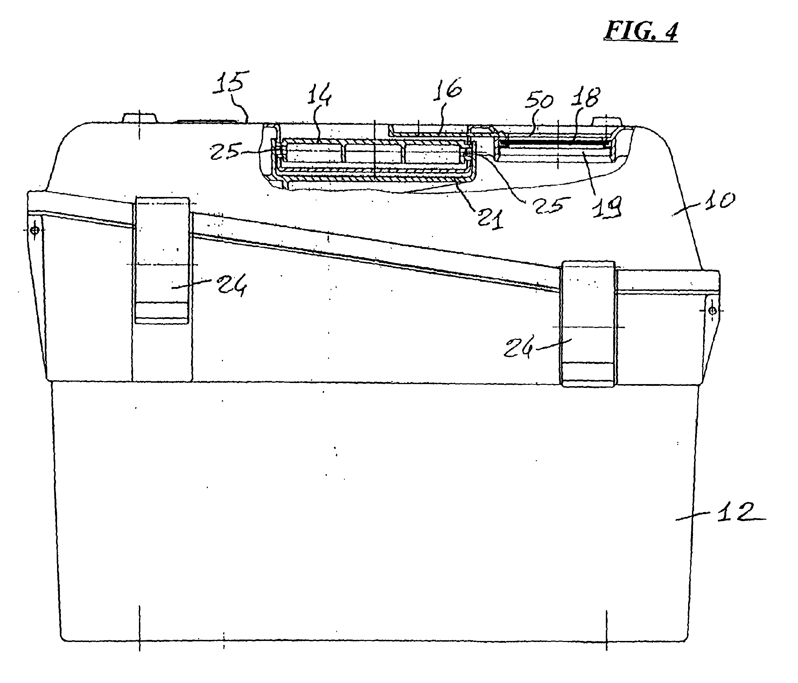

Figures 3 shows the packing container of the invention being transported and figure 4 shows the packing container ready to be opened.

During transportation, the handle 14 is in upright position and the slidable panel 16 covers the protective glass 18 and the glass 19 for welding masks. When the packing container is to be opened, the handle 14 is folded down, the slidable panel 16 may then slide longitudinally along the guide 50 towards a rest position, uncovering the glass windows 19 for welding.

On the inner face of the cap 10 there is a second handgrip 20 that is made accessible only after having folded down the external transportation handle 14. Such a handle 20 transforms the cap 10 in a welding mask, thus integrating in the packing container particularly for welding devices according to the present invention, the most cumbersome accessory necessary for a safe use of a welding machine.

The handgrip 20 of the welding mask has a terminal portion 21 shaped as staple and pivoted on the same pivots 25 of the transportation handle 14.

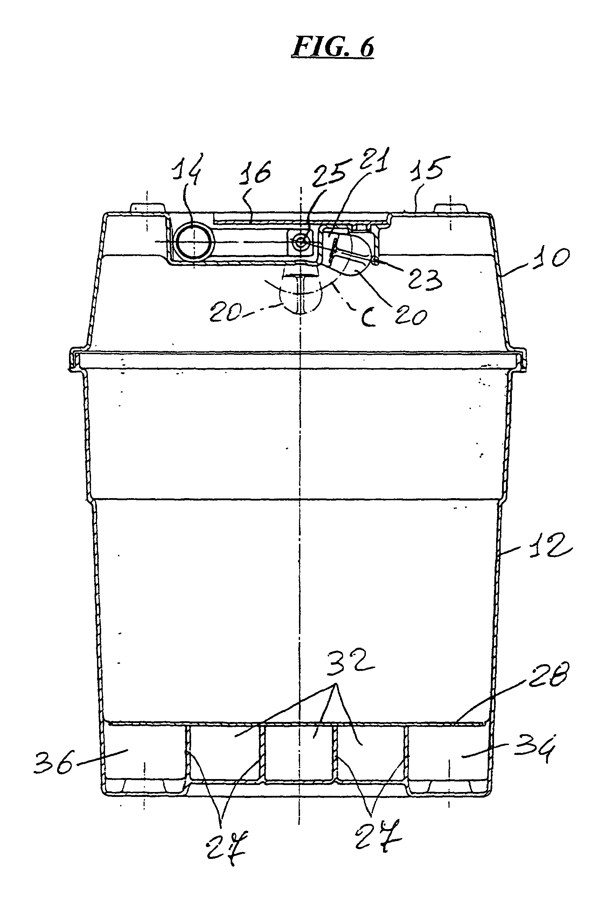

The welding mask may be separated from the body 12 by unblocking the portion 21 from the tooth 23 and rotating it along the arc C of figure 6. This figure shows how in a the closed position the handgrip remains embedded and in the open position (dashed line) the cap 10 is usable as a welding mask.

The slidable panel 16 covering the glass 19 effectively protects the glass for welding mask 19, while transporting the packing container.

Should the user forget to close the sliding panel 16, because of the constructive characteristic of the slidable panel 16, the transportation handle 14 will be unable to rotate upright. Indeed, when the slidable panel 16 is open (see figure 4), the panel 16 covers the transportation handle 14 for a relevant portion of its length, thus preventing it from being rotated to an upright position.

Finally, as it may be observed in figures 3-4, the cap 10 is shaped so that, when it is used as a welding mask, it may be placed on any surface while substantially preventing contact between the protective glass 18 and the surface; this ensures a good protection against accidental impacts. Indeed the glass 19 and the protective glass 18 are held at a slightly recessed level than the external surface 15 of the cap 10.

An important geometric characteristic of the cap 10 consists in that the cap is shaped to fit on the body 12, that constitutes the container, useful for holding accessories and tools and for transporting them, ensuring an orderly and safe superposition.

The body 12 has a plurality of stiffening ribs or beads 27, that ensure a good resistance to impacts; moreover, the layout and dimensions of the stiffening ribs or beads are such to define specific housings for different accessories and tools.

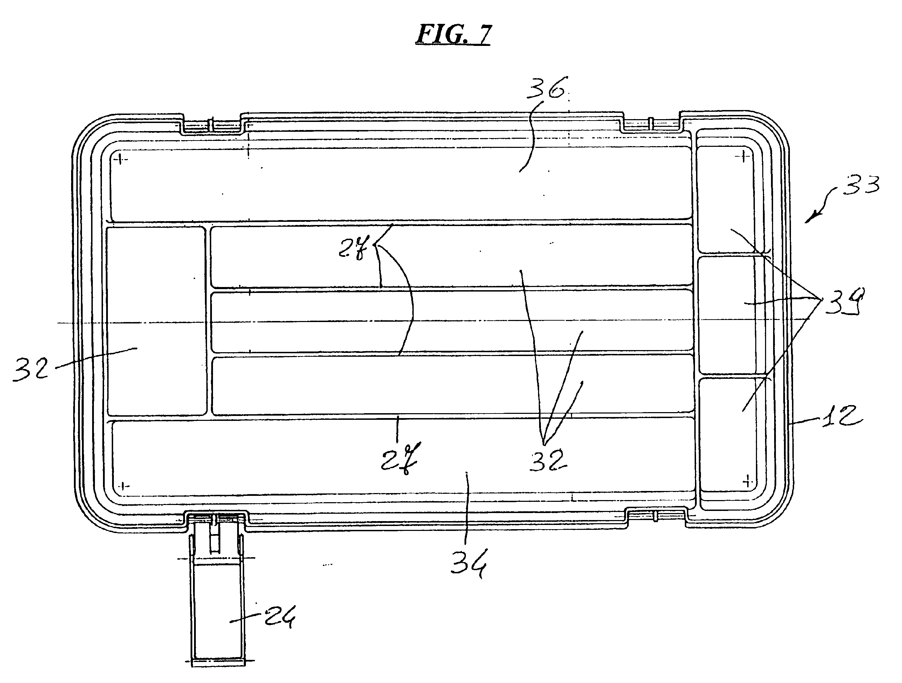

A welding machine 29 may be housed inside the container body 12, resting on feet 41, on a removable bottom plate 28. By removing the bottom plate 28, a plurality of housings 32 defined in a central zone of the bottom inner face 33 are exposed, as depicted in figure 7. Some of this housings may orderly house welding rods of different lengths. The welding rods are thus transported in a protected fashion eliminating the risks of damages and preserving them from accidentally getting wet, an occurrence to which they are very sensitive.

On the bottom surface 33 two other shaped housings 34, 36 are defined. A first housing 34 is sized to stow a torch cable and a grounding cable. They are rolled up and orderly placed near the welding machine 29, so to make easier their location and to make unlikely forgetting them. A second housing 36 may be destined, besides to stow the power cable 38 of the welding machine, to securely space the welding machine 29 from the wall of the container avoiding that the supply cable 38 be crushed during transportation.

Enhanced protection and isolation from shocks on provided by the packing container of the present invention.

For example, according to a preferred but not limiting embodiment the removable bottom plate layer 28 may be of a relatively soft material that blocks firmly besides supporting the welding machine resting on it practically preventing any back and forth, or left and right shifts of the welding machine during transportation.

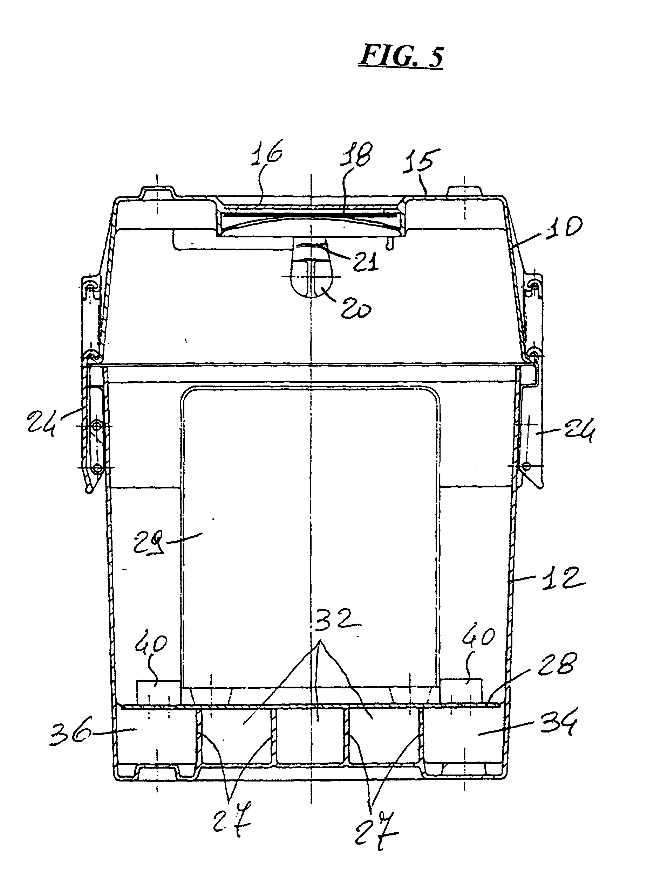

The same elastically deformable material may be used for realizing suitable spacers, labeled as 40 in figures 3 and 5, for blocking the welding machine, the grounding cable and the torch cable that are normally rolled up and stored near the welding machine 29, in place inside the container.

The spacers 40 and the stiffening ribs or beads 27 cooperate in protecting the welding machine from shocks that may damage the internal electronic parts, while retaining the accessories and tools inside their respective housings and in absorbing eventual impacts against the walls of the container.

The empty space labeled as 39 in figure 3 remaining inside the body 12, between the welding machine 29 and the wall of the container, may be used for positioning other spacers such as the ones labeled as 40 and/or for storing other accessories, such as gloves and/or an apron, a grounding cable and a torch cable.

The features and advantages of the packing container, particularly for welding machines, object of the present invention, are evident from the above description.

In particular, the following may be remarked:
- praticality for the user, because the constructive particularities of the packing container ensure a continuous practical accessibility to all tools necessary for welding; moreover, the risk of loosing or forgetting accessories is minimized;
- economy for the user, because the overall cost will be certainly lower than the cost of the specific equipment, of its package and accessories summed to the additional cost of one or more specific containers for transporting the equipment to and from the working place;
- safety for the user, because the risks of forgetting safety accessories, such as the welding mask and the gloves are reduced;
- environment friendliness, because the number of wasted packagings is minimized;
- costs of fabrication, storage, transportation for the manufacturer are lower, given that the cost of an equipment and its accessories is surely smaller, because of the reduced number of packagings and their managing;
- enhanced shock protection of the transported equipment comprised to ordering cardbox packages, and a consequent greater warranty for the manufacturer;
- enhanced safety of transportation;
- reduction of repair costs and of transportation costs because of the reduction of the risks during transportation;
- greater profits for the manufacturer, because of the particular and substantially unique packing-container that may command a higher profit margin and/or because of an associate sale of accessories.

Of course, many modifications may be made to the packing container of the present invention, without going for this reason beyond the limit of the inventive idea as defined in the appended claims.

## Claims

1. Packing container for electrical equipments and accessories, constituted by at least two rigid bodies (10, 12) separable one from the other and hingedly coupling together to constitute said packing container, one of said bodies (10) constitutes a cap of the packing container and has the shape of a welding mask/helmet having a welding glass pane window (18, 19), usable as such when separated from the other body (12) of the packing container, **characterized in that**
said mask/helmet cap body (10) of the packing container has a transportation handle (14) foldable in a recess of the outer face (15) of said cap body (10), a slidable blind (16) to protect the welding glass pane (18, 19), wherein said window (18, 19) is closed by a welding mask glass pane (19) and by a protection glass (18) pane and said slidable blind (16) cannot slide open to uncover the welding glass pane window (18, 19) so much said transportation handle (14) remains in an upright position.

2. The packing container according to claim 1, wherein said welding mask/helmet cap body (10) of the packing container has an extendable handgrip (20) on the inner face.

3. The packing container according to claim 3, wherein said handgrip (20) is in the form of a staple pivoted on pivots (25) common to said transportation outer handle (14).

4. The packing container according to one of claims from 1 to 3, wherein said mask/helmet cap body (10) is locked to said other body (12) of the packing container by a plurality of clasps (24).

5. The packing container according to one of claims from 1 to 4, **characterized in that** it has stiffening ribs (27) defining housings (32, 34, 36, 39) within said other body (12) of the packing container in which accessories and/or tools can be stored.

6. The packing container according to claim 5, **characterized in that** the housings (32, 34, 36) defined on the bottom of said other body (12) of the packing container are covered with a removable bottom plate (28) of a soft material for protecting the items stowed therein.

## Patentansprüche

1. Verpackungsbehälter für elektrische Anlagen und Zubehör, der aus wenigstens zwei starren Körpern (10, 12) gebildet ist, die voneinander trennbar sind und schwenkbar miteinander gekoppelt sind, um den Verpackungsbehälter zu bilden, wobei einer der Körper (10) einen Deckel des Verpackungsbehälters bildet und die Form einer Schweißmaske/eines Schweißhelms hat, die bzw. der ein Schweißglasscheiben-Fenster (18, 19) besitzt und als solche/solcher verwendbar ist, wenn sie/er von dem anderen Körper (12) des Verpackungsbehälters getrennt ist, **dadurch gekennzeichnet, dass**
der Masken-/Helm-Deckelkörper (10) des Verpackungsbehälters einen Transportgriff (14), der in eine Aussparung der äußeren Fläche (15) des Deckelkörpers (10) geklappt werden kann, und einen verschiebbaren Schirm (16), um die Schweißglasscheibe (18, 19) zu schützen, aufweist, wobei das Fenster (18, 19) durch eine Schweißmaskenglasscheibe (19) und durch eine Schutzglasscheibe (18) verschlossen ist und der verschiebbare Schirm (16) nicht so weit aufgeschoben werden kann, dass das Schweißglasscheiben-Fenster (18, 19) abgedeckt ist, solange der Transportgriff (14) in einer aufrechten Position verbleibt.

2. Verpackungsbehälter nach Anspruch 1, bei dem der Schweißmasken-/Schweißhelm-Deckelkörper (10) des Verpackungsbehälters an der inneren Fläche einen ausfahrbaren Handgriff (20) besitzt.

3. Verpackungsbehälter nach Anspruch 3, bei dem der Handgriff (20) die Form einer Klammer hat, die an Drehzapfen (25) angelenkt ist, die dem äußeren Transportgriff (14) gemeinsam sind.

4. Verpackungsbehälter nach einem der Ansprüche 1 bis 3, bei dem der Masken-/Helm-Deckelkörper (10) an dem anderen Körper (12) des Verpackungsbehälters durch mehrere Spangen (24) verriegelt ist.

5. Verpackungsbehälter nach einem der Ansprüche 1 bis 4, **dadurch gekennzeichnet, dass** er Versteifungsrippen (27) besitzt, die Gehäuse (32, 34, 36, 39) in dem äußeren Körper (12) des Verpackungsbehälters definieren, in denen Zubehörteile und/oder Werkzeuge verstaut werden können.

6. Verpackungsbehälter nach Anspruch 5, **dadurch gekennzeichnet, dass** die Gehäuse (32, 34, 36), die in dem Boden des anderen Körpers (12) des Verpackungsbehälters definiert sind, durch eine abnehmbare Bodenplatte (28) aus einem weichen Werkstoff abgedeckt sind, um die darin verstauten Elemente zu schützen.

## Revendications

1. Malette pour équipements et accessoires électriques constituée d'au moins deux corps rigides (10, 12) séparable l'un de l'autre et se couplant par des charnières pour constituer la malette, l'un des corps (10) constituant un couvercle de malette et ayant la forme d'un masque/casque de soudure ayant une fenêtre de soudage en verre (18, 19) utilisable en tant que telle quand elle est séparée de l'autre corps (12) de la malette,
**caractérisé en ce que** le corps de couvercle formant masque/casque (10) de la malette comprend une poignée de transport (14) pliable dans un évidement de la face avant (15) du corps de couvercle (10), un volet coulissant (16) pour protéger le panneau de verre de soudure (18, 19) quand la fenêtre (18, 19) est fermée par un panneau de verre de masque de soudure (19) et par un panneau de protection (18), et **en ce que** le volet coulissant (16) ne peut pas glisser ouvert pour découvrir la fenêtre de panneau de verre de soudure (18, 19) pour autant que la poignée de transport (14) reste dans sa position levée.

2. Malette selon la revendication 1, dans laquelle le corps de couvercle (10) de masque/casque de soudure de la malette comporte une poignée extensible (20) sur sa face interne.

3. Malette selon la revendication 3, dans lequel la poignée (20) a la forme d'une anse montée sur des pivots (25) communs avec la poignée externe de transport (14).

4. Malette selon l'une des revendications 1 à 3, dans laquelle le corps de couvercle formant masque/casque (10) est verrouillé sur l'autre corps (12) de la malette par une pluralité de cliquets (24).

5. Malette selon l'une quelconque des revendications 1 à 4, **caractérisée en ce qu'**elle comprend des nervures raidisseuse (27) définissant des logements (32, 34, 36, 39) dans l'autre corps (12) de la malette dans laquelle des accessoires et/ou des outils peuvent être rangés.

6. Malette selon la revendication 5, **caractérisée en ce que** les boîtiers (32, 34, 36) définis sur le fond de l'autre corps (12) de la malette sont recouverts d'une plaque de fond de l'autre corps amovible (28) en un matériau souple pour protéger les éléments qui y sont rangés.
